# EUROPÄISCHE PATENTANMELDUNG

(11) **EP 1 550 567 A1**
(43) Veröffentlichungstag der Anmeldung: **06.07.2005**
(21) Anmeldenummer: 04000018.4
(22) Anmeldetag: 02.01.2004
(51) Int. Cl.: B60C 23/04

(54) **Vorrichtung und Verfahren zur Prüfung des Fülldrucks eines Reifens**

(71) Anmelder: SIEMENS AKTIENGESELLSCHAFT, 80333 München (DE)
(72) Erfinder: Schiedeck, Martha, 93093 Donaustauf (DE)

(57) **Zusammenfassung**

Die vorliegende Erfindung beschreibt ein Verfahren und eine Vorrichtung zur Prüfung des Fülldrucks eines Reifens eines druckluftbereiften Radfahrzeugs mit: einer an einem ersten Reifen (1) angebrachten Sensoreinrichtung (2) zum direkten Messen des Fülldrucks des ersten Reifens (1); einer Raddrehzahl-Messeinrichtung (4) zum Messen der Raddrehzahl des ersten Reifens (1); mindestens einer weiteren Raddrehzahl-Messeinrichtung (4) zum Messen der Raddrehzahl mindestens eines weiteren Reifens (3); und mit einer zentralen Auswerteeinheit (6), welche mit der Sensoreinrichtung (2) des ersten Reifens (1) und den Raddrehzahl-Messeinrichtungen (4) der Reifen (1, 3) zum Empfangen der jeweils gemessenen Daten zum Ermitteln des Fülldrucks des mindestens einen weiteren Reifens (3) verbunden ist.

## Beschreibung

Die vorliegende Erfindung betrifft eine Vorrichtung und ein Verfahren zur Prüfung des Fülldrucks eines Reifens eines druckluftbereiften Radfahrzeugs.

Obwohl auf beliebige mehrere Reifen aufweisende Fahrzeuge anwendbar, werden die vorliegende Erfindung sowie die ihr zugrundeliegende Problematik in Bezug auf ein Personenkraftfahrzeug erläutert.

Im Stand der Technik sind einige Verfahren zur Erkennung eines Druckverlustes von Reifen in einem Kraftfahrzeug bekannt. Die deutsche Offenlegungsschrift DE 101 29 737 A1 beschreibt beispielsweise ein Verfahren zur Erkennung eines Druckverlustes von Reifen in einem Kraftfahrzeug durch Auswertung von Raddrehzahlinformationen, wobei das Druckverlusterkennungsverfahren neben einem ersten Algorithmus mindestens einen weiteren Algorithmus umfasst, wobei die Algorithmen auf gemeinsam benötigte Verfahrensschritte zurückgreifen können, wobei der weitere Algorithmus auf die Auswertung von Radinformationen während Fahrsituationen beschränkt ist, in der eine oder mehrere ausgewählte Fahrdynamikgrößen kleiner sind als ein jeweils für diese Fahrdynamikgröße vorgegebener Schwellenwert, und wobei die Auswertung des ersten Algorithmus nicht von dieser ausgewählten Fahrdynamikgröße abhängt.

Nachteilig an diesem Ansatz hat sich die Tatsache herausgestellt, dass lediglich indirekte und relative Aussagen über den Fülldruck mit dem angegebenen Verfahren möglich sind.

Die deutsche Offenlegungsschrift DE 101 03 722 A1 beschreibt ein Verfahren zur Prüfung des Reifenfülldrucks eines Fahrzeugs, wobei bei Geradeausfahrt die Drehzahlen der Räder gemessen werden, und wobei bei Abweichungen der gemessenen Drehzahlen voneinander um mehr als eine vorgegebene Toleranz ein Warnsignal für unterschiedliche Reifenfülldrücke erzeugt wird.

An diesem Ansatz hat sich ebenfalls die Tatsache als nachteilig herausgestellt, dass lediglich Abweichungen der Reifenfülldrücke untereinander miteinander verglichen werden, dass jedoch kein absoluter Reifenfülldruck ermittelbar bzw. anzeigbar ist.

Ferner existieren im Stand der Technik die Ansätze, dass jedem Reifen eine elektronische Radeinheit zugeordnet wird, welche mit einem Sensor zum Erfassen von Reifenzustandsgrößen verbindbar ist. Die elektronischen Radeinheiten aller Räder sind einzeln mit einer gemeinsamen Auswerteeinheit verbunden und werden einzeln von einer gemeinsamen Auswerteeinheit ausgewertet, wobei die Messergebnisse einzeln dem Benutzer angezeigt werden.

Dieser Ansatz weist den Nachteil auf, dass ein erheblicher Arbeitsaufwand und erhebliche Kosten dadurch entstehen, dass jedem Reifen eine einen Sensor umfassende elektronische Radeinheit zugeordnet werden muss, um den Reifenfülldruck jedes einzelnen Reifens direkt und getrennt voneinander überprüfen zu können.

Der vorliegenden Erfindung liegt daher die Aufgabe zugrunde, eine Vorrichtung und ein Verfahren zu schaffen, welche eine zuverlässige Überprüfung des Fülldrucks jedes beliebigen Reifens eines Fahrzeugs ohne aufwendige Modifikationen an bestehenden Systemen gewährleisten.

Erfindungsgemäß wird diese Aufgabe vorrichtungsseitig durch eine Vorrichtung mit den Merkmalen des Patentanspruchs 1 und verfahrensseitig durch ein Verfahren mit den Merkmalen des Patentanspruchs 9 gelöst. Ferner wird die Aufgabe durch ein Kraftfahrzeug mit einer erfindungsgemäßen Vorrichtung mit den Merkmalen des Patentanspruchs 15 gelöst.

Die der vorliegenden Erfindung zugrundeliegende Idee besteht darin, dass lediglich an einem Reifen eine Sensoreinrichtung zum direkten Messen des Fülldrucks dieses Reifens angebracht ist, wobei die Raddrehzahlen aller zu überprüfender Reifen mittels jeweils einer zugeordneten Raddrehzahl-Messeinrichtung gemessen und an eine zentrale Auswerteeinheit gesendet werden. Die zentrale Auswerteeinheit ist mit der einen Sensoreinrichtungen und allen Raddrehzahl-Messeinrichtungen verbunden und ermittelt durch Auswerten der gemessenen Daten den Fülldruck der übrigen Reifen, welche keine Sensoreinrichtung zur direkten Messung des Fülldrucks aufweisen. Dabei dient der die Drucksensoreinrichtung aufweisende Reifen als Referenzreifen mit einem Referenzfülldruck bei einer bestimmten gemessenen Raddrehzahl. Durch Messung der Raddrehzahlen der weiteren zu prüfenden Reifen kann aus den Abweichungen der gemessenen Raddrehzahlen von der Referenzraddrehzahl des Referenzreifens unter Berücksichtigung des Referenzfülldrucks des Referenzreifens der Fülldruck der übrigen zu überprüfenden Reifen auf einfache Weise bestimmt werden.

Somit weist die vorliegende Erfindung gegenüber den Ansätzen gemäß dem Stand der Technik den Vorteil auf, dass lediglich ein Reifen eine elektronische Radeinheit mit einer integrierten Drucksensoreinrichtung zum direkten Messen des absoluten Reifenfülldrucks aufweist und nicht alle Reifen mit einer derartigen aufwendigen Elektronik und Sensoreinrichtung versehen werden müssen.

Ferner weist die vorliegende Erfindung den Vorteil auf, dass bestehende Sensoren zur Messung der Raddrehzahlen der einzelnen Reifen für das Verfahren der vorliegenden Erfindung verwendet werden können, wodurch der Modifikationsaufwand minimiert wird. Zusätzlich werden Arbeitsaufwand und Kosten verringert.

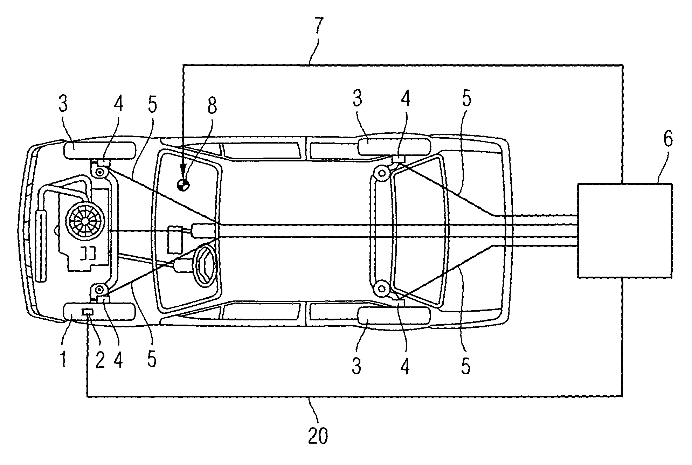

Weitere vorteilhafte Ausgestaltungen und Weiterbildungen der Erfindung sind Gegenstand der Unteransprüche sowie der Beschreibung unter Bezugnahme auf die beiliegende Figur der Zeichnung.

Gemäß einem bevorzugten Ausführungsbeispiel ist die Sensoreinrichtung zum direkten Messen des absoluten Fülldrucks als Druckmessfühler ausgebildet und an dem Reifen oder dessen Felge befestigbar. Vorteilhaft kann die Sensoreinrichtung Bestandteil einer elektronischen Radeinheit sein, welche vorteilhaft mittels einer Funkverbindung die gemessenen Daten der Sensoreinrichtung an die zentrale Auswerteeinheit sendet.

Gemäß einer weiteren bevorzugten Weiterbildung weist jeder Reifen des druckluftbereiften Radfahrzeugs eine Raddrehzahl-Messeinrichtung auf. Vorzugsweise sind die Raddrehzahl-Messeinrichtungen als Sensoren eines Anti-Blockiersystems (ABS) oder dergleichen ausgebildet. Dadurch muss das vorhandene System lediglich geringfügig modifiziert werden

Die zentrale Auswerteeinheit ist vorzugsweise mit einer Anzeigeeinrichtung verbunden, welche einen kritischen Reifendruck eines bestimmten gemessenen Reifens dem Kraftfahrzeugfahrer als beispielsweise Warnsignal anzeigt.

Gemäß einem weiteren bevorzugten Ausführungsbeispiel werden für einen bestimmten Reifen mehrere Fülldrücke durch einen Vergleich der gemessenen Raddrehzahl mit der Referenzraddrehzahl des Referenzreifens ermittelt, wobei der gemittelte Fülldruck dieser mehreren Messungen bestimmt wird. Dadurch kann die Zuverlässigkeit der Messung erhöht werden.

Vorzugsweise werden zusätzliche reifenspezifische Faktoren und/oder witterungsspezifische Faktoren bei der Analysierung der gemessenen Daten mitberücksichtigt.

Die Erfindung wird nachfolgend anhand des in der schematischen Figur der Zeichnung angegebenen Ausführungsbeispiels näher erläutert. Die Figur zeigt dabei eine schematische Ansicht einer erfindungsgemäßen Vorrichtung gemäß einem Ausführungsbeispiel der vorliegenden Erfindung.

Wie in der Figur ersichtlich ist, weist vorzugsweise lediglich ein erster Reifen 1 des Fahrzeugs eine Sensoreinrichtung 2 zum Messen von Reifenzustandsgrößen, wie beispielsweise Temperatur, Luftdruck, etc. auf. Die Sensoreinrichtung 2 ist beispielsweise an dem Ventil des ersten Reifens 1 oder an dem Grund der zugeordneten Radfelge angeordnet. Die Sensoreinrichtung 2 ist ferner mit einer elektronischen Radeinheit (nicht dargestellt) verbunden bzw. in einer derartigen integriert, welche die gemessenen Signale bzw. Daten der Sensoreinrichtung 2 empfängt und über eine Verbindung 20, vorzugsweise eine Funkverbindung 20, an eine zentrale Auswerteeinheit sendet. Es ist für einen Fachmann offensichtlich, dass die Sensoreinrichtung 2 auch direkt mit der zentralen Auswerteeinheit 6 zum Senden der gemessenen Reifenzustandsdaten verbunden sein kann.

Der von der Sensoreinrichtung 2 direkt gemessene Fülldruck des ersten Reifens 1 dient als Referenzwert für den Druck und der erste Reifen 1 dient entsprechend als Referenzreifen. Es sei an dieser Stelle darauf hingewiesen, dass vorteilhaft lediglich der erste Reifen 1 und nicht alle übrigen Reifen 3 eine Sensoreinrichtung bzw. eine elektronische Radeinheit aufweist, so dass der Fülldruck der übrigen Reifen 3 mittels des gemessenen Referenzdrucks des Referenzreifens 1 bestimmt wird, wie weiter unten ausführlicher beschrieben wird.

Wie in der Figur ferner ersichtlich ist, ist dem ersten Reifen 1 und jedem übrigen Reifen 3 jeweils eine Raddrehzahl-Messeinrichtung 4 zugeordnet, welche die Drehzahlen der einzelnen Räder 1, 3 misst. In Kraftfahrzeugen, die mit einem elektronischen System zur Bremsdruckregelung oder zur Regelung der Fahrdynamik (ABS, ASR, ESP, etc.) ausgestattet sind, wird die Winkelgeschwindigkeit der einzelnen Fahrzeugräder gewöhnlich bereits durch Raddrehzahlsensoren aufgenommen. Somit können vorzugsweise diese Sensoren der bereits in dem System vorhandenen elektronischen Regelungssysteme zur Messung der Raddrehzahlen der jeweiligen Räder 1, 3 verwendet werden, wodurch eine zusätzliche Ausstattung mit derartigen Sensoren entfällt und Kosten sowie Arbeitsaufwand minimiert werden.

Es ist bekanntermaßen möglich, einen aufgetretenen Druckverlust in einem Reifen durch eine genaue Analyse der Radgeschwindigkeitsdaten festzustellen, da sich bei gleichbleibender Fahrgeschwindigkeit bei einem Reifendruckverlust die Winkelgeschwindigkeit des defekten Rades geringfügig erhöht. Denn bei einem Rad mit einem zu geringen Reifenfülldruck ist der Durchmesser geringer und deshalb die Raddrehzahl höher. Analog hierzu ist bei einem Rad mit einem zu hohen Reifenfülldruck, z.B. durch Erwärmung verursacht, der Durchmesser größer. Die Raddrehzahl dieses Rades ist entsprechend geringer. Sind die gemessenen Raddrehzahlen der einzelnen gemessenen Räder 3 unterschiedlich zu der gemessenen Raddrehzahl des Referenzrades 1, so ist dies ein Hinweis auf unterschiedliche Reifenfülldrücke, die dem Fahrer angezeigt werden sollten, damit dieser bei nächster Gelegenheit die Fülldrücke entsprechend korrigieren kann.

Die einzelnen Raddrehzahl-Messeinrichtungen 4 sind vorzugsweise mittels einer jeweiligen Verbindung 5 ebenfalls mit der zentralen Auswerteeinheit 6 verbunden, wie in der Figur ersichtlich.

Die zentrale Auswerteeinheit 6 empfängt somit vorzugsweise sowohl den direkt gemessenen absoluten Reifenfülldruck des Referenzreifens 1 als auch die Raddrehzahl des Reifens 1 sowie zusätzlich die Raddrehzahlen der übrigen Reifen 3. Durch Vergleich der gemessenen Raddrehzahlen der übrigen Reifen 3 mit der Raddrehzahl des Referenzreifens 1 ergibt sich aus der Abweichung der jeweiligen Raddrehzahlen unter Berücksichtigung des gemessenen absoluten Fülldrucks des Referenzreifens 1 aufgrund eines charakteristischen Zusammenhangs der Größe der Abweichung der jeweiligen Raddrehzahlen mit der Größe des Unterschiedes der zugehörigen Fülldrücke der entsprechenden Reifen indirekt der absolute Fülldruck der übrigen Reifen 3.

Beispielsweise können alternativ oder zusätzlich weitere Referenzwerte in einer zugeordneten Speichereinrichtung abgespeichert und zur Ermittelung des einer bestimmten Abweichung zwischen der Raddrehzahl eines weiteren Reifens 3 und des Referenzreifens 1 zugeordneten Fülldrucks des überprüften weiteren Reifens 3 herangezogen werden.

Beispielsweise wird aus mehreren aufeinanderfolgenden Ermittlungen des Fülldrucks eines weiteren Reifens 3 ein gemittelter Fülldruck bestimmt und mittels einer Anzeigeeinrichtung 8, die über eine Datenverbindung 7 mit der zentralen Auswerteeinheit verbunden ist, ausgegeben. Beispielsweise wird dem Fahrer mittels der Anzeigeeinrichtung 8 ein Warnsignal, insbesondere ein akustisches oder optisches Warnsignal, ausgegeben, falls eine Abweichung des gemessenen Fülldrucks des ersten Referenzreifens 1 von dem ermittelten Fülldruck eines weiteren Reifens 3 um mehr als eine vorgegebene Toleranz durch die zentrale Auswerteeinheit 6 ermittelt wird.

Es ist ebenfalls vorstellbar, dass anstatt von absoluten Fülldruckwerten der übrigen Reifen 3 lediglich relative Fülldruckabweichungen aufgrund der Raddrehzahlabweichungen bestimmt werden, wobei bei Überschreiten bzw. Unterschreiten eines kritischen Abweichungs-Schwellenwertes ebenfalls ein Warnsignal mittels der Anzeigeeinrichtung 8 ausgegeben werden kann.

Zusätzlich können weitere reifenspezifische Faktoren und/oder witterungsspezifische Faktoren bei der Auswertung der gemessenen Daten durch die zentrale Auswerteeinheit 6 mitberücksichtigt werden. Beispielsweise kann mittels einer Anti-Schlupfelektronik ein etwaiger Schlupf des zu prüfenden Reifens bei der Auswertung mitberücksichtigt werden.

## Patentansprüche

1. Vorrichtung zur Prüfung des Fülldrucks eines Reifens eines druckluftbereiften Radfahrzeugs
mit einer an einem ersten Reifen (1) angebrachten Sensoreinrichtung (2) zum direkten Messen des Fülldrucks des ersten Reifens (1);
mit einer Raddrehzahl-Messeinrichtung (4) zum Messen der Raddrehzahl des ersten Reifens (1),
mit mindestens einer weiteren Raddrehzahl-Messeinrichtung (4) zum Messen der Raddrehzahl mindestens eines weiteren Reifens (3) und
mit einer zentralen Auswerteeinheit (6), welche mit der Sensoreinrichtung (2) des ersten Reifens (1) und den Raddrehzahl-Messeinrichtungen (4) der Reifen (1, 3) zum Empfangen der jeweils gemessenen Daten zum Ermitteln des Fülldrucks des mindestens einen weiteren Reifens (3) verbunden ist.

2. Vorrichtung nach Anspruch 1,
**dadurch gekennzeichnet,**
**dass** die Sensoreinrichtung (2) des ersten Reifens (1) als Druckmessfühler ausgebildet ist.

3. Vorrichtung nach Anspruch 1 oder 2,
**dadurch gekennzeichnet,**
**dass** die Sensoreinrichtung (2) des ersten Reifens (1) an dem ersten Reifen (1) oder dessen Felge befestigbar ist.

4. Vorrichtung nach wenigstens einem der vorhergehenden Ansprüche,
**dadurch gekennzeichnet,**
**dass** die Sensoreinrichtung (2) des ersten Reifens (1) als Bestandteil einer elektronischen Radeinheit ausgebildet ist.

5. Vorrichtung nach wenigstens einem der vorhergehenden Ansprüche,
**dadurch gekennzeichnet,**
**dass** die Sensoreinrichtung (2) des ersten Reifens (1) mittels einer Datenverbindung (20), beispielsweise einer Funkverbindung, mit der zentralen Auswerteeinheit (6) verbunden ist.

6. Vorrichtung nach wenigstens einem der vorhergehenden Ansprüche,
**dadurch gekennzeichnet,**
**dass** jeder Reifen (1, 3) des druckluftbereiften Radfahrzeugs eine Raddrehzahl-Messeinrichtung (4) aufweist.

7. Vorrichtung nach wenigstens einem der vorhergehenden Ansprüche,
**dadurch gekennzeichnet,**
**dass** die Raddrehzahl-Messeinrichtungen (4) als Sensoren eines elektronischen Systems zur Bremsdruckregelung und/oder zur Regelung der Fahrdynamik (ABS, ASR, ESP, etc.) ausgebildet sind.

8. Vorrichtung nach wenigstens einem der vorhergehenden Ansprüche,
**dadurch gekennzeichnet,**
**dass** die zentrale Auswerteeinheit (6) mit einer Anzeigeeinrichtung (8) über eine Datenverbindung (7) verbunden ist.

9. Verfahren zur Prüfung des Fülldrucks eines Reifens eines druckluftbereiften Radfahrzeugs mit folgenden Verfahrensschritten:
(a) Messen des Fülldrucks eines ersten Reifens (1) mittels einer Sensoreinrichtung (2);
(b) Messen der Raddrehzahl des ersten Reifens (1) mittels einer Raddrehzahl-Messeinrichtung (4);
(c) Messen der Raddrehzahl mindestens eines weiteren Reifens (3) mittels mindestens einer weiteren Raddrehzahl-Messeinrichtung (4);
(d) Senden der gemessenen Daten an eine zentrale Auswerteeinheit (6);
(e) Ermitteln des Fülldrucks des mindestens einen weiteren Reifens (3) durch Auswerten der gemessenen Daten mittels der zentralen Auswerteeinheit (6).

10. Verfahren nach Anspruch 9,
**dadurch gekennzeichnet,**
**dass** die gemessene Raddrehzahl des mindestens einen weiteren Reifens (3) mit der gemessenen Raddrehzahl des ersten Reifens (1) verglichen wird und dass aus der Abweichung unter Berücksichtigung des gemessenen Fülldrucks des ersten Reifens (1) der Fülldruck des mindestens einen weiteren Reifens (3) bestimmt wird.

11. Verfahren nach wenigstens einem der Ansprüche 9 oder 10,
**dadurch gekennzeichnet,**
**dass** aus mehreren aufeinanderfolgenden Ermittlungen des Fülldrucks des mindestens einen weiteren Reifens (3) ein gemittelter Fülldruck bestimmt wird.

12. Verfahren nach wenigstens einem der Ansprüche 9 bis 11,
**dadurch gekennzeichnet,**
**dass** bei Abweichung des gemessenen Fülldrucks des ersten Reifens (1) und/oder des ermittelten Fülldrucks des mindestens einen weiteren Reifens (3) um mehr als eine vorgegebene Toleranz von einem vorbestimmten Soll-Wert ein Warnsignal mittels der zentralen Auswerteeinheit (6) erzeugt und mittels einer Anzeigeeinrichtung (8) ausgegeben wird.

13. Verfahren nach wenigstens einem der Ansprüche 9 bis 12,
**dadurch gekennzeichnet,**
**dass** zusätzliche reifenspezifische Faktoren und/oder witterungsspezifische Faktoren mitberücksichtigt werden.

14. Verfahren nach wenigstens einem der Ansprüche 9 bis 13,
**dadurch gekennzeichnet,**
**dass** mittels einer Anti-Schlupfelektronik ein etwaiger Schlupf des zu überprüfenden Reifens mitberücksichtigt wird.

15. Kraftfahrzeug mit einer Vorrichtung zur Überprüfung des Fülldrucks eines Reifens, wobei die Vorrichtung nach wenigstens einem der Ansprüche 1 bis 8 insbesondere zur Durchführung des Verfahrens nach wenigstens einem der Ansprüche 9 bis 14 ausgebildet ist.
